# EUROPÄISCHE PATENTSCHRIFT

(11) **EP 2 166 869 B1**
(45) Veröffentlichungstag und Bekanntmachung des Hinweises auf die Patenterteilung: **02.11.2011**
(21) Anmeldenummer: 08773504.9
(22) Anmeldetag: 19.06.2008
(51) Int. Cl.: A23G 3/54, A23G 3/50, A23G 1/22, A23G 1/50, A23G 1/54

(54) **SÜSSWAREN-PRODUKT**
CANDY PRODUCT
PRODUIT DE CONFISERIE

(30) Priorität: 05.07.2007 DE 102007031369
(43) Veröffentlichungstag der Anmeldung: 31.03.2010
(73) Patentinhaber: Mederer GmbH, 90763 Fürth (DE)
(72) Erfinder: MEDERER, Herbert, 90768 Fürth (DE)
(74) Vertreter: Rau, Albrecht
(86) Internationale Anmeldenummer: PCT/EP2008/004914
(87) Internationale Veröffentlichungsnummer: WO 2009/003585

(56) Entgegenhaltungen:
- EP-A- 0 429 969
- EP-A- 0 498 357
- EP-A- 0 661 002
- EP-A- 0 806 151
- EP-A- 0 838 157
- EP-A- 1 040 763
- EP-A- 1 214 889
- DE-A1- 3 527 418
- DE-C1- 19 849 816
- DE-U1- 20 300 983
- GB-A- 612 029
- GB-A- 2 018 668
- GB-A- 2 196 828
- GB-A- 2 396 547
- JP-A- 4 281 743
- JP-A- 63 301 747

## Beschreibung

Die vorliegende Erfindung betrifft ein Süßwaren-Produkt sowie ein Verfahren zu deren Herstellung.

Ein Süßwaren-Produkt umfassend mehrere Schichten aus Schokolade ist in der JP 04 281743 A offenbart. Die GB 612 029 A zeigt eine Gussform mit mehreren Form-Bereichen zur Herstellung eines Süßwaren-Produkts.

Aus der DE 203 00 983 U1 ist ein kugelförmiger Bonbon mit einem Kern aus Fruchtgummi-Masse sowie einer Umhüllung aus Schokolade bekannt. Weitere Süßwaren-Produkte sind beispielsweise aus der JP 63 301 747 A, der EP 1 214 889 A1, der GB 2 396 547 A, der EP 1 040 763 A1, der EP 0 806 151 A1, der GB 2 196 828 A, der DE 35 27 418 A1, der EP 0 661 002 A, der EP 0 429 969 A, der GB 2 018 668 A, der EP 0 498 357 A. der EP 0 838 157 A und der DE 198 49 816 B1 bekannt.

Der Erfindung liegt die Aufgabe zugrunde, ein neuartiges Süßwaren-Produkt zu schaffen.

Die Aufgabe wird durch die Merkmale der unabhängigen Ansprüche 1 und 7 gelöst. Der Kern der Erfindung besteht darin, bei einem Schokoladenriegel beziehungsweise einer Schokoladentafel auf der Oberseite Vertiefungen vorzusehen, in denen Einsätze aus Fruchtgummi, insbesondere Gummibärchen, festgelegt sind, die von außen sichtbar sind.

Weitere vorteilhafte Ausgestaltungen ergeben sich aus den Unteransprüchen. Zusätzliche Merkmale und Einzelheiten der Erfindung ergeben sich aus der Beschreibung eines Ausführungsbeispiels anhand der Zeichnung. Es zeigen
- Fig. 1: eine perspektivische Ansicht eines Süßwaren-Produkts,
- Fig. 2: eine Schnittdarstellung gemäß der Schnittlinie II - II in Fig. 1
- Fig. 3: eine Draufsicht auf eine Gussform zur Herstellung des Süßwaren-Produkts gemäß Fig. 1,
- Fig. 4: eine Schnittdarstellung gemäß der Schnittlinie IV- IV in Fig. 3 und
- Fig. 5: eine Schnittdarstellung entsprechend Fig. 4 einer gefüllten Gussform.

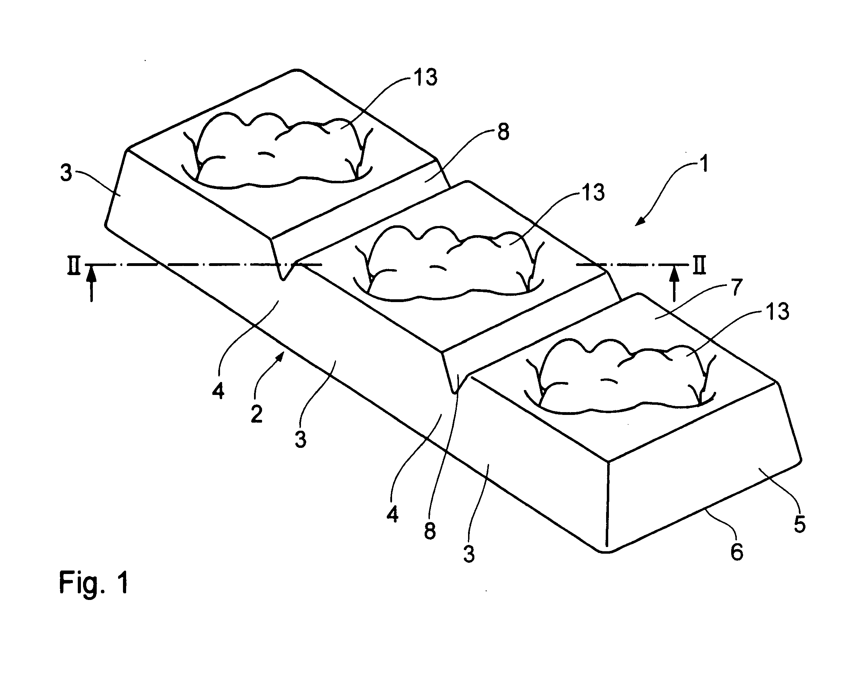

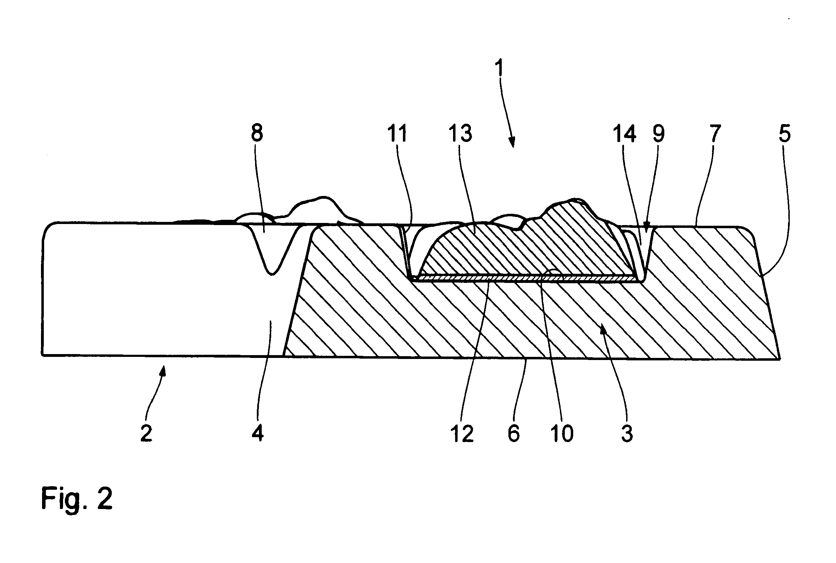

Im Folgenden wird unter Bezugnahme auf die Fig. 1 und 2 ein Süßwaren-Produkt 1 beschrieben. Dieses weist einen Grundkörper 2 auf, der die Form eines Schokoladenriegels bestehend aus drei Einzel-Stücken 3 besitzt, die über Bruchstege 4 miteinander verbunden sind. Es ist auch möglich, dass der Grundkörper 2 die Form nur eines Einzel-Stücks besitzt oder die einer Schokoladen-Tafel mit Einzel-Stücken, die in zwei verschiedene Richtungen nebeneinander angeordnet sind. Der Grundkörper 2 weist umfangsseitig sich schräg nach unten verbreiternde Seitenplanken 5, eine Unterseite 6 sowie eine Oberseite 7 auf. Die Bruch-Stege 4 werden durch grabenartige Längsvertiefungen 8 in der Oberseite 7 gebildet. Der Grundkörper 2 besteht aus einem fetthaltigen Süßwaren-Material, insbesondere Schokolade, insbesondere Bitterschokolade, Zartbitterschokolade, Vollmilchschokolade oder weißer Schokolade. Es können auch schokoladeähnliche Massen, bei denen die Kakaobutter durch ein anderes Pflanzenfett ersetzt wurde, verwendet werden.

In der an sich planaren Oberseite 7 ist in jedem Einzel-Stück 3 eine Vertiefung 9 mit einem planaren Grund 10 vorgesehen. Die die Vertiefung umfangsseitig begrenzenden Flanken 11 verlaufen schräg nach unten, sodass die Vertiefung 9 im Bereich des Grundes 10 eine kleinere Querschnittsfläche besitzt als im Bereich ihres oberen Randes. Auf dem Grund 10 der Vertiefung 9 ist eine dünne Grenz-Schicht 12 aus einem Süßwaren-Material, insbesondere einem fetthaltigen Süßwaren-Material, insbesondere Schokolade, insbesondere weiße Schokolade, vorgesehen.

Auf der Grenzschicht 12 ist ein Einsatz 13 angeordnet, der aus einem Süßwaren-Material, insbesondere aus Fruchtgummi-Masse oder Gelee besteht. Dieses hat im vorliegenden Fall die Form eines Gummibärchens, wobei die Vorderseite des Gummibärchens mit angedeuteten Füßen, Armen, Ohren und Nase nach außen vorsteht. Der Einsatz 13 steht gegenüber der Oberseite 7 hervor. Es ist auch möglich, den Einsatz 13 so auszugestalten, dass dessen Oberseite mit der Oberseite 7 des Einzel-Stücks 3 fluchtet. Umfangsseitig besteht zwischen dem Einsatz 13 und den umlaufenden Flanken 11 eine grabenförmige Vertiefung 14, sodass der Einsatz 13 nur auf seiner Unterseite über die Grenzschicht 12 mit dem Grundkörper 2 verbunden ist. Durch diese Art der Anordnung ist der Einsatz 13 von oben und perspektivisch von der Seite frei einsehbar, wodurch die ästhetische Wirkung verbessert wird. Die Grenzschicht 12 hat die Aufgabe, vor allem bei heller Fruchtgummi-Masse den Blick auf die dunkle Schokolade des Grundkörpers 2 abzudecken, damit auch helle, wie zum Beispiel gelbe Gummibärchen, durch die braune Schokolade in ihrer Farbwirkung nicht beeinträchtigt werden. Die Einsätze 13 sind in den Einzelstücken 3 auf der jeweiligen Diagonale angeordnet, um die Fläche besser zu nutzen. Es ist jedoch möglich, die Einsätze 13 auch anders zu orientieren. Darüber hinaus ist es auch möglich, die Form der Einzelstücke 3 von quadratisch in rechteckig oder sogar dreieckig zu ändern.

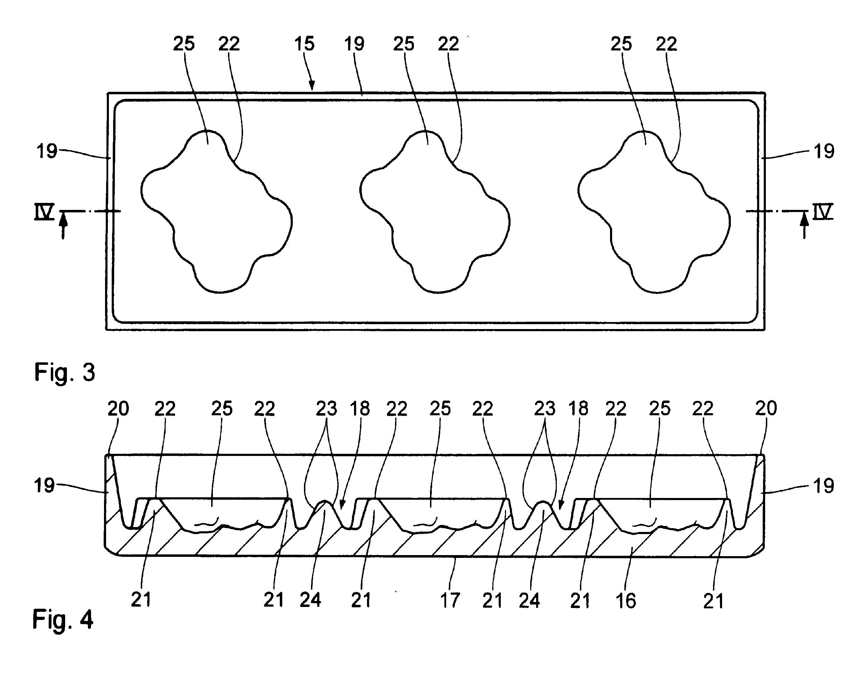

Im Folgenden wird unter Bezugnahme auf die Fig. 3 und 4 eine Gussform 15 zur Herstellung des Süßwaren-Produkts 1 beschrieben. Die Gussform 15 weist einen Formboden 16 mit im Wesentlichen rechteckigem Querschnitt auf. Dessen Unterseite 17 ist planar ausgebildet. Auf dessen Oberseite 18 ist die Negativform des Süßwaren-Produkts 1 ausgebildet. Die Gussform 15 weist einen an den Außenseiten des Formbodens 16 angeordneten, nach oben vorstehenden Außen-Formsteg 19 mit einem oberen Rand 20 auf. Der Außen-Formsteg 19 besitzt im Wesentlichen im Querschnitt eine rechteckige Form und eine geschlossene Kontur. Innerhalb des Außen-Formstegs 19 sind mehrere, im vorliegenden Fall drei, ebenfalls eine geschlossene Kontur bildende, Innen-Formstege 21 mit einem oberen Rand 22 vorgesehen. Der obere Rand 20 steht gegenüber den tiefsten Punkten der Gussform 15 ungefähr doppelt so hoch hervor wie die inneren Ränder 22. Die Innen-Formstege 21 begrenzen die Negativform für den jeweiligen Einsatz 13. Im vorliegenden Fall handelt es sich hierbei um die Negativform eines Gummibärchens. Zwischen jeweils zwei benachbarten, geschlossenen Innen-Formstegen 21 ist jeweils eine gegenüber dem Formboden 16 nach oben vorstehende, mit schräg verlaufenden Flanken 23 ausgestattete Barriere 24 angeordnet, die später bei dem Süßwaren-Produkt die Vertiefung 8 bildet. Die Barrieren 24 stehen gegenüber dem Formboden 16 ungefähr soweit hervor, wie die Innen-Formstege 21 gegebenenfalls etwas weniger. Sollen nicht wie in Fig. 1 riegelförmige Süßwaren-Produkte, sondern schokoladentafelartig aufgeteilte Süßwaren-Produkte erzeugt werden, so besitzt die jeweilige Gussform nicht nur parallel zueinander verlaufende Barrieren, sondern ein kartesisches Raster von Barrieren. Die von den Innen-Formstegen 21 umschlossenen Einsatz-Formen 25 sind, wie bereits in Bezug auf das Süßwaren-Produkt 1 erläutert, um 45 ° gegen die Längserstreckungsrichtung des Grundkörpers 2 verdreht angeordnet.

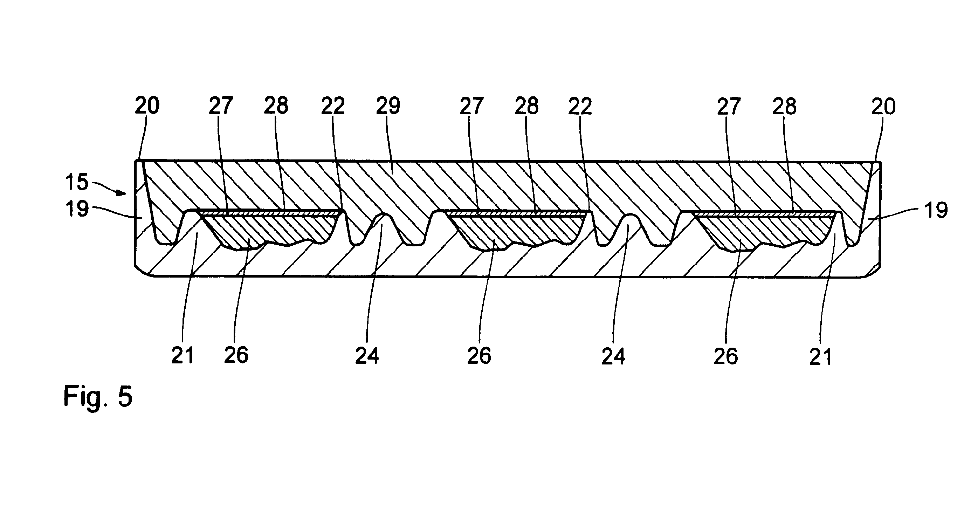

Im Folgenden wird unter Bezugnahme auf Fig. 5 die Herstellung des Süßwaren-Produkts 1 erläutert. Es wird von der leeren Gussform 15, wie in Fig. 4 dargestellt, ausgegangen. Anschließend wird zumindest die Oberfläche der Einsatz-Formen 25 beölt, was durch Sprühen oder Tampon-Druck geschehen kann. Anschließend wird flüssige Fruchtgummi-Masse 26 in die Einsatz-Formen 25 gefüllt, wobei die Oberseite 27 der Fruchtgummi-Masse 26 unterhalb des Randes 22 zu liegen kommt, das heißt die jeweilige Einsatzform 25 nicht vollständig gefüllt wird. Auf die Oberseite 27 wird eine dünne Schicht weiße Schokolade 28 gegossen, sodass eine klebende Verbindung zwischen der Fruchtgummi-Masse 26 und der weißen Schokolade 28 entsteht. Anschließend wird die Gussform 15 bis zum oberen Rand 20 mit dunkler Schokolade 29, insbesondere Vollmilchschokolade, gefüllt, wobei sich eine klebende Verbindung zwischen der weißen Schokolade 28 und der braunen Schokolade 29 ergibt. Bei den aufeinander folgenden Gießprozessen wird darauf geachtet, dass die zuvor gegossene Masse soweit erkaltet ist, dass es zu keiner Vermischung mit der darauf gegossenen Schicht kommt, die darunter liegende Schicht jedoch noch so warm ist, dass es zu einer klebenden Gussverbindung zwischen beiden Schichten kommt. Die Einsätze 13 sind somit über Gießverbindungen mit dem Grundkörper 2 fest verbunden. Anschließend wird den Massen 26, 28 und 29 ausreichend Zeit gegeben, zu erstarren, bevor das Süßwaren-Produkt 1 aus der Gussform 15 entfernt und verpackt wird. Aus Praktikabiliätsgründen ist es möglich, zahlreiche Gussformen 15 in Matrixform angeordnet zu einer Groß-Gussform zusammen zu fügen.

Das entstehende Süßwaren-Produkt 1 verbindet die Reize von Schokolade und Fruchtgummi. Die optisch ansprechende und leuchtende Natur der Fruchtgummi-Formen bleibt erhalten, insbesondere auch durch die optische Trennschicht aus weißer Schokolade.

## Patentansprüche

1. Süßwaren-Produkt mit
a. einem aus einem ersten Süßwaren-Material (29) bestehenden Grundkörper (2), welcher mindestens eine Vertiefung (14) aufweist, wobei es sich bei dem ersten Süßwaren-Material (29) um ein fetthaltiges Süßwaren-Material, insbesondere Schokolade, handelt und
b. mindestens einem, in der mindestens einen Vertiefung (14) angeordneten, von außen sichtbaren Einsatz (13),
c. wobei der mindestens eine Einsatz z(13) mit dem Grundkörper (2) vergossen ist,
**dadurch gekennzeichnet, dass**
d. der Einsatz (13) aus einem zweiten Süßwaren-Material (26) besteht, und
e. es sich bei dem zweiten Süßwaren-Material (26) um Fruchtgummi-Masse handelt.

2. Süßwaren-Produkt gemäß einem der vorangehenden Ansprüche, **dadurch gekennzeichnet, dass** zwischen dem ersten Süßwaren-Material (29) und dem zweiten Süßwaren-Material (26) ein drittes Süßwaren-Material (28) angeordnet ist.

3. Süßwaren-Produkt gemäß Anspruch 2, **dadurch gekennzeichnet, dass** es sich bei dem dritten Süßwaren-Material (28) um ein fetthaltiges Süßwaren-Material handelt, das heller als das erste Süßwaren-Material (29)ist.

4. Süßwaren-Produkt gemäß einem der vorangehenden Ansprüche, **dadurch gekennzeichnet, dass** es sich bei dem Grundkörper (2) um einen Riegel oder eine Tafel mit Bruch-Stegen (4) zum Erzeugen einzelner Stücke (3) durch Abbrechen handelt.

5. Süßwaren-Produkt gemäß einem der vorangehenden Ansprüche, **dadurch gekennzeichnet, dass** es sich bei dem mindestens einen Einsatz (13) um ein Gummibärchen handelt.

6. Süßwaren-Produkt gemäß einem der vorangehenden Ansprüche, **dadurch gekennzeichnet, dass** der mindestens eine Einsatz (13) nach oben und/oder umfangsseitig frei liegt.

7. Verfahren zur Herstellung eines Süßwaren-Produkts (1) gemäß einem der Ansprüche 1 bis 6 umfassend die folgenden Schritte:
- Bereitstellen einer Gussform (15) mit
a. einem Formboden (16),
b. mindestens einem, vom Formboden (16) vorstehenden, umfangsseitig geschlossenen, zweiten Formsteg (21) zur Begrenzung der Aufnahme eines zweiten Süßwaren-Materials (26), und
c. mindestens einem, vom Formboden (16) über den mindestens einen zweiten Formsteg (21) hinaus hervorstehenden, umfangsseitig geschlossenen, ersten fonnsteg (19) zur Begrenzung der Aufnahme eines ersten Süßwaren-Materials (29),
- Einfüllen eines zweiten Süßwaren-Materials (26) in die jeweils von den zweiten Formstegen (21) umschlossenen Bereiche,
- Einfüllen eines ersten Süßwaren-Materials (29) in den von dem ersten Formsteg (19) umgebenen Bereich, wobei es sich bei dem ersten Süßwaren-Material (29) um ein fetthaltigen Süßwaren-Material, insbesondere Schokolade, handelt,
- Erstarren lassen des ersten und zweiten Süßwaren-Materials (29, 26),
- Entfernen des entstandenen Süßwaren-Produkts (1) aus der Gussform (15),
**dadurch gekennzeichnet, dass**
es sich bei dem zweiten Süßwaren-Material (26) um Fruchtgummi-Masse handelt und
das Einfüllen des ersten Süßwaren-Materials (29) erfolgt, wenn das zweite Süßwaren-Material (26) soweit erkaltet ist, dass es zu keiner Vermischung der Süßwaren-Materialien (26, 29) kommt, , und wenn das zweite Süßwaren-Material (29) noch so warm ist, dass es zu einer klebenden Gießverbindung zwischen den Süßwaren-Materialien (26,29) kommt.

## Claims

1. Sweet goods product having
a. a base body (2) consisting of a first sweet goods material (29), which base body exhibits at least one depression (14), wherein the first sweet goods material (29) is a fat-containing sweet goods material, especially chocolate, and
b. at least one insert (13), arranged in the at least one depression (14) and visible from the outside,
c. wherein the at least one insert (13) is cast with the base body (2),
**characterized in that**
d. the insert (3) consists of a second sweet goods material (26), and
e. the second sweet goods material (26) is a fruit gum mass.

2. Sweet goods product according to one of the previous claims, **characterised in that** between the first sweet goods material (29) and the second sweet goods material (26) there is arranged a third sweet goods material (28).

3. Sweet goods product according to claim 2, **characterised in that** the third sweet goods material (28) is a fat-containing sweet goods material with a lighter colour than the first sweet goods material (29).

4. Sweet goods product according to one of the previous claims, **characterised in that** the base body (2) is a bar or tablet having breaking lines (4) to produce individual pieces (3) by breaking them off.

5. Sweet goods product according to one of the previous claims, **characterised in that** the at least one insert (13) is a gummy bear.

6. Sweet goods product according to one of the previous claims, **characterised in that** the at least one insert (13) lies exposed towards the top and/or on its circumferential side.

7. Method for producing a sweet goods product (1) according to one of claims 1 to 6, comprising the following steps:
- providing a mould (15) with
a. a mould bottom (16),
b. at least one second mould ridge (21) protruding from the mould bottom (16) and closed alongside its circumference, to limit the accommodation of a second sweet goods materials (26), and
c. at least one first mould ridge (19) protruding from the mould bottom (16) beyond the at least one second mould ridge (21), closed on its circumferential side, to limit the accommodation of a first sweet goods material (29)
- filling a second sweet goods material (26) into the areas enclosed in each case by the second mould ridges (21),
- filling a first sweet goods material (29) into the area enclosed by the first mould ridge (19), wherein the first sweet goods material (29) is a fat-containing sweet goods material, especially chocolate,
- allowing the first and the second sweet goods material (29, 26) to solidify,
- removing the created sweet goods product (1) from the mould (15),
**characterized in that**
- the second sweet goods material (26) is a fruit gum mass and
- filling the first sweet goods material (29) takes place when the second sweet goods material (26) cooled down far enough so that there is no mixing of the sweet good materials (26, 29), and when the second sweet goods material (29) is still warm enough for a sticky cast connection to result between the sweet good materials (26, 29).

## Revendications

1. Produit de confiserie comprenant
a. un corps de base (2) constitué d'une première matière de confiserie (29), lequel corps de base présentant au moins un évidement (14), la première matière de confiserie (29) étant une matière de confiserie contenant des matières grasses, en particulier du chocolat, et
b. au moins une inclusion (13), visible de l'extérieur, disposée dans au moins un évidement (14),
c. au moins une inclusion (13) étant moulée avec le corps de base (2),
**caractérisé en ce que**
d. l'inclusion (13) est constituée d'une seconde matière de confiserie (26), et
e. qu'il s'agit, dans le cas de la seconde matière de confiserie (26), d'une masse de gomme de fruit.

2. Produit de confiserie selon la revendication 1, **caractérisé en ce qu'**entre la première matière de confiserie (29) et la seconde matière de confiserie (26) se trouve disposée une troisième matière de confiserie (28).

3. Produit de confiserie selon la revendication 2 **caractérisé en ce que**, pour la troisième matière de confiserie (28), il s'agit d'une matière de confiserie contenant des matières grasses qui est plus claire que la première matière de confiserie (29).

4. Produit de confiserie selon l'une des revendications précédentes **caractérisé en ce que**, pour le corps de base (2) il s'agit d'une barre ou d'une tablette comprenant des prédécoupes (4) pour la réalisation de morceaux individuels (3) par rupture.

5. Produit de confiserie selon l'une des revendications précédentes **caractérisé en ce que**, pour au moins l'une des inclusions (13), il s'agit d'un ourson en gomme.

6. Produit de confiserie selon l'une des revendications précédentes **caractérisé en ce qu'**au moins l'une des inclusions (13) est située vers le haut et/ou est située libre de tout environnement.

7. Procédé de fabrication d'un produit de confiserie (1) selon l'une des revendications de 1 à 6 comprenant les étapes suivantes :
- préparation d'un moule (15) comprenant
a. un fond de moule (16),
b. au moins une seconde armature de moule (21) fermée sur son périmètre, dépassant du fond de moule (16) pour la délimitation de la zone de réception d'une seconde matière de confiserie (26), et
c. au moins une première armature de moule (19) fermée sur son périmètre, dépassant du fond de moule (16) au-delà au moins de la seconde armature de moule (21), pour la délimitation de la zone de réception d'une première matière de confiserie (29)
- remplissage avec une seconde matière de confiserie (26) des zones entourées de la seconde armature (21)
- remplissage avec une première matière de confiserie (29) du domaine entourant la première armature de moule 19), où dans le cas de la première matière de confiserie (29), il s'agit d'une matière de confiserie contenant des matières grasses, en particulier du chocolat,
- prise en masse des première et seconde matières de confiserie (29, 26),
- démoulage à partir du moule (15) du produit de confiserie (1) obtenu,
**caractérisé en ce que**
- pour la seconde matière de confiserie (26) il s'agit d'une masse de gomme de fruit et
- le remplissage de la première matière de confiserie (29) a lieu lorsque la deuxième matière de confiserie (26) est quasiment refroidie afin qu'il ne se produise pas de mélange des matières de confiserie (26, 29) et que la deuxième matière de confiserie (29) soit encore assez chaude pour qu'il se produise une liaison de collage par fusion entre les matières de confiserie (26, 29).
